(19) Europäisches Patentamt

European Patent Office

Office européen des brevets

(11) **EP 1 720 021 A1**

(12) **EUROPÄISCHE PATENTANMELDUNG**

(43) Veröffentlichungstag:
**08.11.2006 Patentblatt 2006/45**

(51) Int Cl.:
*G01R 5/00* *(2006.01)*    *G01D 13/00* *(2006.01)*

(21) Anmeldenummer: 06009219.4

(22) Anmeldetag: **04.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **04.05.2005 DE 102005021350**

(71) Anmelder: **Prefag Carl Rivoir GmbH & Co . Fabrik für Präzisionskleinteile KG 75045 Walzbachtal (DE)**

(72) Erfinder: **Rivoir, Dirk 75245 Neulingen-Göbrichen (DE)**

(74) Vertreter: **Pfister, Stefan Helmut Ulrich et al Pfister & Pfister Patent-& Rechtsanwälte Hallhof 6-7 87700 Memmingen (DE)**

(54) **Messvorrichtung**

(57)    Die Erfindung betrifft eine Meßvorrichtung, insbesondere ein Meßwerk sowie ein Verfahren für das Auswerten der Position eines Zeigers und des weiteren ein Meß- bzw. Auswertsystem unter Einsatz des Meßwerkes. Die Meßvorrichtung dient zur Darstellung eines elektrischen Signales, z. B. eines Meßsignales. Die Meßvorrichtung besteht aus einem Zeiger, der durch einen Stellantrieb in Abhängigkeit des Signales positionierbar ist. Es werden ein Positionsdetektor für die Position des Zeigers und eine Auswerteeinheit, die das durch den Zeiger darzustellende Signal aufbereitet, vorgeschlagen.

EP 1 720 021 A1

**Beschreibung**

Die Erfindung betrifft eine Meßvorrichtung, insbesondere ein Meßwerk zur Darstellung eines elektrischen Signals, z.B. eines Meßsignals, bestehend aus einem insbesondere ablesbaren Zeiger, der durch einen Stellantrieb in Abhängigkeit des Signals positionierbar ist.

Vorgenannte Meßvorrichtung bzw. Meßwerke finden z.B. verwendung in allgemein bekannten Meßgeräten, bei welchen z.B. physikalische werte wie Stromwerte, eine Spannung, eine Temperatur oder einen sonstigen physikalischen Wert mit Hilfe eines Zeigers vor einer Skala angezeigt werden. Die bekannten Meßwerke arbeiten dabei analog, das bedeutet, es erfolgt eine kontinuierliche Meßwertanzeige durch das Meßwerk. Es sind aber auch Meßwerke bekannt, die ein digitales Verarbeiten des Signales durchführen und dann z.B. über entsprechende Schrittmotoren den Zeiger steuern.

Der Einsatz solcher Meßwerke ist sehr vielfältig. Für das Steuern und Führen von Anlagen oder Fahrzeugen sind vorgenannte Meßwerke nach wie vor im Einsatz und wurden durch eine digitale Anzeige bzw. eine Anzeige in Ziffern nicht verdrängt.

In der Regel sind die Meßwerke elektrisch beaufschlagt, das bedeutet, der anzuzeigende Wert wird in Form eines elektrischen Signals (z.B. einer Spannung) an das Meßwerk gegeben. Aufgrund der elektromagnetischen und permanentmagnetischen Abstoßungskräfte erfolgt eine Auslenkung des Zeigers auf einer dem elektrischen Eingangssignal entsprechenden Position.

Die bekannten Meßwerke, wenn sie z.B. in entsprechenden Meßgeräten Verwendung finden, werden insbesondere durch Ablesen einer Bedienperson genutzt. Hierauf ist der Gegenstand der Erfindung aber nicht beschränkt. Die dem Signal entsprechende Zeigerposition kann auch in anderer Weise ausgewertet werden, z.B. durch optisches Abtasten usw.

Die bekannten Meßwerke stellen dabei den Zeiger durch einen Stellantrieb in Abhängigkeit des Signales in eine entsprechende Position. Die Erfindung beschränkt sich dabei nicht nur auf einen rein linearen bzw. proportionalen Zusammenhang zwischen der Positionierung des Zeigers in Abhängigkeit des angelegten elektrischen Signales. Es können selbstverständlich auch andere Übertragungsfunktionen für die Position des Zeigers aufgrund des elektrischen Signals, welches durch den Stellantrieb darzustellen ist, erreicht werden. Auch hierin ist die Erfindung nicht beschränkt.

Bei den Anzeigen kann es zu Linearitätsabweichungen zwischen dem Eingangssignal und der Zeigerposition kommen. Diese Linearitätsabweichung wird je nach Meßwerkkonstruktion durch mechanische Einstellungen am Luftspalt oder unterschiedliche Beeinflussungen der verschiedenen magnetischen Komponenten reduziert bzw. gemindert. Komplett eliminieren läßt sich ein solcher Fehler allerdings nicht. Hieraus resultiert, daß der Zeiger unter Umständen einen falschen Wert anzeigt oder unter Umständen den Bediener bzw. die Personen, welche die Anzeige des Meßgerätes bzw. Meßwerkes ablesen, verwirrt oder irritiert.

Ein Gerät, wie zuvor beschrieben, ist im Stand der Technik bekannt. Es wird dabei ein Gerät zum kontinuierlichen Ablesen der Stellung eines beweglichen Gliedes, insbesondere eines Anzeigeorgans von Meßinstrumenten mit zentraler Nullstelle vorgeschlagen, welches eine Wechselspannungsquelle und einen mit der Ableseeinrichtung verbundenen und zum Induzieren elektrischer Impulse bestimmten mechanischen Teil aufweist. Der Aufbau eines solchen Gerätes ist sehr kompliziert und benötigt insbesondere ständig eine Wechselspannungsquelle, um überhaupt funktionieren zu können. Die aus dem Stand der Technik bekannte Vorrichtung ist weiterhin durch eine äußerst komplizierten mechanischen Aufbau gekennzeichnet und benötigt eine Vielzahl von Elektroden, die induzierte Impulssignale erfassen.

Es ist weiterhin aus dem Stand der Technik ein Verfahren zur Korrektur systematischer Geometriefehler in einem Drehwinkelmeßgerät bekannt, welches derart arbeitet, dass dieses Gerät einmal kalibriert wird, und dann aufgrund dieser einmaligen Kalibrierung bestimmte Korrekturwerte ermittelt werden, die der Korrektur dann beim Anzeigen des Wertes zugrunde gelegt werden. Dieses Gerät arbeitet nicht kontinuierlich und ist trotz des Korrekturfaktors mit Ungenauigkeiten in der Anzeige behaftet. Insbesondere werden Abweichungen dann nicht festgestellt, wenn sich der Korrekturwert beispielsweise verändert.

Ausgehend von diesem Stand der Technik ist es Aufgabe der Erfindung, Vorschläge zu machen, den angezeigten Wert von Meßwerken zu erfassen.

Zur Lösung der Aufgabe wird eine Meßvorrichtung, insbesondere ein Meßwerk zur Darstellung eines elektrischen Signals, zum Beispiel eines Meßsignals, bestehend aus einem insbesondere ablesbaren Zeiger, der durch einen Stellantrieb in Abhängigkeit des Signales positionierbar ist, vorgeschlagen, die durch einen Positionsdetektor für die Position des Zeigers gekennzeichnet ist, wobei der Positionsdetektor die Position des Zeigers kontinuierlich an eine Auswerteeinheit überträgt, die das durch den Zeiger darzustellende Signal aufbereitet.

Durch den erfindungsgemäß vorgeschlagenen Positionsdetektor wird es möglich, die tatsächlich angezeigte Position des Zeigers kontinuierlich (natürlich bezogen auf dessen Skala) zu erkennen und auszuwerten.

Dieser Vorschlag eröffnet erhebliche Möglichkeiten. Zunächst ist es mit diesem Vorschlag möglich, dafür zu sorgen, daß der Zeiger den tatsächlichen am Meßwerk anliegenden Wert anzeigt. Hierzu wird die von dem Positionsdetektor aufgenommene Zeigerposition auf das Eingangssignal, das elektrische Signal, zurückgekoppelt und entsprechend das Signal korrigiert. Hieraus resultiert eine fehlerfreie Anzeige, wobei das Meßwerk exakt den Wert mit dem Zeiger anzeigt, welcher das elektrische Signal überträgt. Auf bauliche Gegebenheiten des Meßwerkes kommt es daher nicht mehr an, um eine hohe Genauigkeit zu erreichen. Die sowieso nicht eliminierbaren Linearitätsprobleme (z.B. aufgrund Reibung oder Anordnung des magnetischen Luftspaltes usw.) können durch den erfindungsgemäßen Vorschlag ideal kompensiert und ausgeglichen werden. Dies führt aber dazu, daß der oftmals hohe feinwerktechnische Aufwand für die Realisierung des hochgenau funktionierenden Meßwerkes ohne Einbuße der Genauigkeit reduziert werden kann, wodurch sich die Herstellung des Meßwerkes verbilligen läßt. Dies ist ein erheblicher Vorteil gegenüber dem Stand der Technik, da man für günstige Entstehungskosten ein Meßwerk mit höherer Präzision erhält!

Im Gegensatz zu den aus dem Stand der Technik bekannten Lösungen arbeitet die Vorrichtung nach der Erfindung derart, dass der Positionsdetektor die tatsächliche Stellung des Zeigers bzw. der Anzeige kontinuierlich erfasst und diese kontinuierlich auch einer Auswerteeinheit zuleitet, die dieses Signal dann auch entsprechend auswertet. So werden beispielsweise Fehler eliminiert, die durch eine Kalibrierung entstehen können oder aber die sich im Laufe der Zeit, durch Veränderungen am Meßgerät einstellen, die von der einmal vorgenommenen Kalibrierung bei Geräten des Standes der Technik dann nicht mehr erfasst werden können. Die erfindungsgemäße Vorrichtung erfasst immer die tatsächliche Stellung anhand des Sensors, der das Signal an die Auswerteeinheit weiterleitet und die Auswerteeinheit dieses nach einem bestimmten Algorhythmus auswertet, wobei die Auswertung dann zu einem korrigierten Signal führt, welches gegebenenfalls zur Korrektur der Anzeige verwendet wird, derart, dass ständig der angezeigte Wert auch dem tatsächlichen Wert des Signals entspricht.

Die erfindungsgemäße Lösung zeichnet sich im Gegensatz zu einer weiteren aus dem Stand der Technik bekannten Lösung dadurch aus, dass sie einen sehr einfachen mechanischen Aufbau gewährleistet und trotzdem eine sichere Erfassung der Position des Zeigers erlaubt und die insbesondere fehlerfrei arbeitet. Im Weiteren kann die Anzahl der Ableseelektroden, die bei den Lösungen nach dem Stand der Technik erforderlich sind und die insbesondere auch noch in unterschiedlichen Ebenen angeordnet werden müssen, auf ein Minimum reduziert werden. Im Weiteren ist es ebenfalls nicht notwendig, ein Verfahren anzuwenden, bei dem eine ausgeschiedene Anzahl von Null-Stellungen gezählt werden muss und damit die Winkelstellung dann angegeben wird. Auch dieses Verfahren führt notwendigerweise zu Fehlern, die durch die Lösungen nach dem Stand der Technik nicht vermieden werden können. Bei der erfindungsgemäßen Lösung treten diese nachteiligen Wirkungen nicht mehr auf.

Hierauf beschränkt sich die Liste der Vorteile der Erfindung aber nicht. Zu dem erfindungsgemäßen Vorschlag, einen Positionsdetektor für die Position des Zeigers vorzusehen, werden aber auch noch andere Anwendungsmöglichkeiten eröffnet. So ist es z.B. möglich, die von dem Zeiger angezeigte Position zu speichern.

Der erfindungsgemäße Vorschlag erreicht somit des weiteren, daß z.B. angezeigte Prozeßdaten gespeichert werden können. Solche Anwendungen sind z.B. für die Black-Box in Hochgeschwindigkeitszügen oder Flugzeugen einsetzbar.

Eine vorteilhafte Weiterbildung der zuvor beschriebenen Lösung nach der Erfindung zeichnet sich dadurch aus, dass die Auswerteeinheit als Signalaufbereitung ausgebildet ist und diese Signalaufbereitung kontinuierlich einen Soll-/Ist-Vergleich zwischen dem eingangsseitigen Signal und dem Zeigersignal durchzuführen vermag und ein ausgangsseitiges Signal mit der Maßgabe aufbereitet, dass der angezeigt Wert auch dem tatsächlichen Wert des Signals entspricht. Dazu wird der Auswerteeinheit beziehungsweise der Signalaufbereitung ein entsprechender, weiter hinten noch ausführlich beschriebener Algorhythmus vorgegeben, anhand dessen die Auswertung problemlos erfolgen kann.

Erfindungsgemäß ist es weiterhin entsprechend einer Variante der Erfindung vorgesehen, dass die Signalaufbereitung derart ausgebildet ist, dass sie das korrigierte beziehungsweise ausgangsseitige Signal dem Stellantrieb zuleitet.

In einer bevorzugten Variante der Erfindung wird vorgeschlagen, daß das Meßwerk analog ausgebildet ist. Unter einem analogen Meßwerk wird hierbei verstanden, daß das elektrische Signal nicht digitalisiert wird. Ein analoges Meßwerk zeichnet sich insbesondere durch einen kontinuierlichen Anzeigebereich aus, wenngegen ein digitales Meßwerk die Position des Zeigers nur in diskreten Schritten anzuzeigen vermag. Grundsätzlich erstreckt sich die Erfindung auf eine analoge sowie digitale Ausgestaltung des Meßwerkes, wenngleich der Einsatz eines analogen Meßwerkes bzw. die Realisierung der Erfindung in einem analogen Meßwerk erhebliche Realisierungsvorteile aufweist. Man spart sich nämlich hierdurch, das in der Regel analog anliegende Eingangssignal in einen Analog-Digital(AD)-Konverter zu digitalisieren. Des weiteren ist der erfindungsgemäße Vorschlag bei bereits bestehenden, analog ausgebildeten Meßwerken, z.B. Drehspuleninstrumente und dergleichen, mit nur geringem Aufwand realisierbar. Die Erfindung eignet sich sogar dazu, bestehende Meßwerke nachzurüsten.

Bevorzugterweise wird vorgeschlagen, daß der Stellantrieb durch ein den Zeiger aufgrund des Signales bewegendes Signalkraftelement und ein Rücktreibelement gebildet ist. Aufgrund des elektrischen Signales wird eine den Zeiger bewegende Kraft erzeugt. Hierfür dient das Signalkraftelement. Um den Zeiger an einer dem anliegenden Signal entsprechenden Position sicher zu positionieren, ist ein Rücktreibelement vorgesehen, welches eine das Signalkraftelement entgegengerichtete Kraftkomponente entwickelt und den Zeiger an der gewünschten Position durch Kräftegleichheit positioniert.

In einer bevorzugten Variante der Erfindung ist vorgesehen, daß das Signalkraftelement aufgrund elektromagnetischer und permanentmagnetischer Abstoßungskräfte eine Bewegung des Zeigers bewirkt. Aufgrund der magnetischen Wirkung eines stromdurchflossenen Leiters ist es möglich, eine der Stärke des fließenden Stromes entsprechende Abstoßungskraft zu realisieren, welche als Signalkraftelement dient. Dabei wird ausgenutzt, daß sich gleichnamige Magnetpole abstoßen. Dadurch ist es möglich, eine Bewegung des Zeigers zu bewirken. Üblicherweise wird das Elektrosignal als Spannung zur Verfügung gestellt, welche bei einem (konstant angenommenen) Widerstand zu einem entsprechenden Strom in Abhängigkeit des Wertes des Signales führt.

Die Erfindung ist sehr variabel einsetzbar. Es wird vorgeschlagen, daß der Zeiger entweder eine lineare Bewegung ausführt oder eine Schwenkbewegung. So ist es prinzipiell möglich, auch das Wirkprinzip eines Elektromagneten einzusetzen, wobei der zeiger in diesem Fall z.B. an der Ankerstange des Elektromagneten angeordnet wäre. Eine solche Anordnung führt zu einem analog arbeitenden linearen Meßwerk. Wohl bekannt sind aber auch Meßwerke, bei welchen der Zeiger eine Schwenkbewegung ausführt, der Zeiger also bevorzugterweise auf einer Welle dreh- bzw, verschwenkbar gelagert ist. Natürlich sind auch andere kompliziertere Führungen möglich, um eine entsprechende Schwenkbewegung des Zeigers zu realisieren. Auch dies wird von der Erfindung umfaßt.

Die Erfindung nutzt in einer bevorzugten Variante aus, daß das Meßwerk z.B. nach dem Konstruktionsprinzip eines Drehspul-, Dreheisen- oder Drehmagnetmeßwerkes ausgebildet ist. Da die Erfindung, wie beschrieben, nicht auf eine drehbare Lagerung des Zeigers beschränkt ist, umfaßt das Meßwerk erfindungsgemäß ein/e/en sich mit dem Zeiger mitbewegende Spule, Eisen oder Magneten, wobei die Spule usw. bei einem drehbar gelagerten Zeiger z.B. eine Drehspule usw. ist.

Geschickterweise wird für das Rücktreibelement ein Federelement vorgesehen, da das Federelement ein bezüglich des Federweges in der Regel lineare Federkonstante aufweist und so ein Gegengewicht zu der Kraft des Signalkraftelementes bewirkt. Es sind aber auch andere Rücktreibelemente einsetzbar. Die Erfindung erlaubt es aber, bei der Güte des Rücktreibelementes, welches bei den bekannten Meßwerken ja entsprechend hoch zu wählen ist, Einsparungen vorzusehen, da es auf die Güte, also insbesondere die Linearität der Federkonstanten nach der Erfindung nicht mehr zwingend ankommt. Da die Erfindung prinzipiell erlaubt, daß mit Hilfe der Ermittlung der Position des Zeigers durch den Positionsdetektors ein Nachführen des Zeigers an den tatsächliche, dem Signal entsprechenden Skalenwert möglich ist, kann die Anordnung des erfindungsgemäßen Meßwerkes so ausgestaltet werden, daß mit Sicherheit exakt der richtige Wert angezeigt wird, ohne dabei sehr aufwendige Meßwerkbauteile, insbesondere hochlineare Rücktreibelemente, einzusetzen.

In der erfindungsgemäßen Variante wird vorgeschlagen, daß der Positionsdetektor aus einem Sensor und einem mit dem Sensor zusammenwirkenden Sensorelement besteht. Der Positionsdetektor hat die Aufgabe, die Position, also die Stellung des Zeigers zu übermitteln. Diese Lagebestimmung erfolgt gegenüber einem entsprechenden Referenzpunkt, weshalb der Positionsdetektor bevorzugt aus einem am Meßwerk feststehenden und einem mit dem Zeiger mitbewegenden Element besteht. Der Einsatz eines Sensors erlaubt, die jeweilige Position des Zeigers zu übermitteln, wodurch sich ergibt, daß bevorzugterweise der Sensor am Meßwerk feststehend ausgebildet ist und die mit dem Sensor zusammenwirkenden sensorelemente die gleichen Bewegungen ausführen wie der Zeiger (z.B. eine lineare oder rotatorische Bewegung). Auch ist grundsätzlich eine umgekehrte Anordnung möglich, indem z.B. der Sensor die gleiche Bewegung ausführt wie der Zeiger und die mit dem Sensor zusammenwirkenden Sensorelemente. Z.B. unterscheiden sich die von den Sensorelementen abgegebenen Informationen derart eindeutig, daß es für den mitbewegenden Sensor möglich ist, die jeweiligen Sensorelemente einzeln zu identifizieren und so die Position des Zeigers genau festzustellen und mitzuteilen.

Durch die Wahl des Sensorelementes und natürlich des damit zusammenwirkenden Sensors wird auch eine möglichst störungsunanfällige Ausbildung des Positionsdetektors angestrebt. Wird z.B. der Positionsdetektor bei normalen Bedingungen eingesetzt, so kann es günstig sein, diesen abgeschirmt im infraroten Spektralbereich einzusetzen, um so Störeinflüsse von außerhalb zu minimieren. Ein spezielles Schutzgehäuse für den Sensor ist dabei unabhängig von seiner genauen Ausgestaltung zur Vermeidung von entsprechenden Störeffekten grundsätzlich günstig.

Die Erfindung beschränkt sich bei der Ausgestaltung des Positionsdetektors, also den dessen Funktionsweise zugrundeliegenden physikalischen Grundlagen, in keinster Weise. So wird gemäß der Erfindung vorgeschlagen, daß ein optisch, kapazitiv, magnetisch oder mit elektromagnetischen Wellen wirkender Positionsdetektor eingesetzt wird. Natürlich ist ein optisch wirkender Positionsdetektor ein Spezialfall eines Postitionsdetektors, welcher mit elektromagnetischen Wellen wirkt.

Es ist aber auch möglich, den Positionsdetektor mit einer Radiofrequenz oder Mikrowelle zu betreiben. Auch ist es im Rahmen der Erfindung möglich, den Positionsdetektor mit einer Mehrzahl von Sensoren auszustatten, die mit einem entsprechenden eindeutigen Punkt des Sensorelementes zusammenwirken und diesen entsprechend "einpeilen". Hierdurch kann eine hochgenaue Positionsbestimmung erfolgen.

Die Erfindung schlägt des weiteren vor, daß der Positionsdetektor in Transmissions- oder Reflektionsweise arbeitet. In einer solchen Variante der Erfindung ist vorgesehen, daß der Sensor einen lichtempfindlichen Detektor umfaßt. Aufgrund der Stellung des Sensorelementes bzw. der Relativpositionierung des Sensorelementes zum Detektor ist eine Positionsermittlung möglich.

Durch den erfindungsgemäßen Vorschlag, daß der Sensor einen Lichtemitter umfaßt, kann sich die Erfindung in einfacher Weise von störenden Signalen abkoppeln. Z.B. ist es möglich, daß das von dem Lichtemitter abgegebene Lichtsignal in geeigneter Weise getaktet, also getriggert ist und der lichtempfindliche Detektor genau im gleichen Takt abgestimmt ist, wodurch entsprechende Störsignale als Offset herausfilterbar sind.

Bevorzugterweise wird vorgeschlagen, daß der Sensor sowohl einen Lichtemitter wie auch den lichtempfindlichen Detektor umfaßt und z.B. als integriertes Bauteil ausgebildet ist, wodurch der Detektor sehr klein realisierbar ist.

Bevorzugterweise wird vorgeschlagen, daß der Sensor im infraroten, optisch sichtbaren oder ultravioletten Spektralbereich arbeitet. Dieser Spektralbereich ist insbesondere durch LED's als Lichtemitter und Dioden als optisch empfindliche Detektoren sehr gut beherrscht und günstig einsetzbar.

Die Erfindung schlägt mehrere Varianten vor, wie das Sensorelement angeordnet werden kann. Zunächst ist es möglich, daß das Sensorelement auf der Welle drehbar gelagert ist und so die gleiche Drehbewegung ausführt wie der Zeiger. Diese Anordnung erlaubt es, die Lage des Sensorelementes von der Position des Zeigers zu trennen und so die Position des Zeigers an einer anderen Stelle, z.B. daß es bei der Ausführung des Meßwerkes passend ist (z.B. mechanisch geschützt), zu realisieren. Hierdurch wird die Länge der Welle günstigerweise ausgenützt.

Bei einer anderen geschickten Anordnung des erfindungsgemäßen Meßwerkes wird vorgesehen, daß das Sensorelement auf einer Welle durch diese drehbar gelagert ist und an dem Sensorelement ein Zeigerträger anschließt, welcher den Zeiger trägt.

Diese Variante bringt das Sensorelement in unmittelbare Nähe zum Zeiger, wobei unter Umständen das Sensorelement auch ein Teil des Zeigers bzw. Zeigerträgers oder auch Zeigerkreuzes ist.

Günstigerweise wird vorgeschlagen, daß das Sensorelement ring- oder scheibenartig ausgebildet ist. Diese prinzipiell runde Anordnung wird dabei geschickterweise konzentrisch zur Achse der Welle gewählt, um eine hohe Genauigkeit zu erreichen. Eine ringartige Ausgestaltung spart Masse und realisiert daher das notwendige Drehmoment, eine scheibenartige Ausgestaltung erhöht die Stabilität des Sensorelementes.

Das Sensorelement ist bevorzugterweise mit dem Zeiger verbunden. Das Sensorelement führt die Bewegung des Zeigers aus und wirkt mit dem Sensor zusammen. Da durch das Zusammenspielen von Sensorelement und Sensor im Positionsdetektor die jeweilige Stellung, des Zeigers zu ermitteln ist, ist es günstig, die Ausgestaltung des Sensorelementes entsprechend der Bewegungsbahn des Zeigers anzupassen. So ergibt es sich, daß das Sensorelement gegebenenfalls eine runde Ausgestaltung oder auch länglich (bei linearen Bewegungen) des Zeigers ausgebildet ist. Günstigerweise trägt das Sensorelement Sensormittel, die jeweils einzeln mit dem Sensor in der gewünschten Weise zusammenwirken. Geschickterweise wird die Erfindung dabei so ausgebildet, daß am Umfang oder im Randbereich des Sensorelementes eine Mehrzahl oder sogar Vielzahl von Sensormitteln angeordnet sind. Durch eine hohe Anzahl von Sensormitteln wird dabei eine entsprechend hohe Ermittlung der Position erreicht. Die Sensormittel sind dabei bevorzugterweise diskret, also unterscheidbar bzw. abzählbar ausgebildet.

In der bevorzugten Variante der Erfindung ist vorgesehen, daß die Sensormittel inkremental an dem Sensorelement angeordnet sind. Geschickterweise werden die einzelnen Sensormittel auf dem Sensorelement äquidistant angeordnet. Sie werden also in diskreten Abschnitten ausgeführt, wobei die Inkrementweite, also z.B. deren Durchmesser der Breite, auch ein Maß für die Genauigkeit der ermittelten Position darstellt. Es ist daher unter Umständen günstig, den Durchmesser eines z.B. ring- oder scheibenartig ausgebildeten Sensorelementes deutlich größer zu wählen wie die Länge des Zeigers und dadurch eine größere Anzahl von einzelnen inkremental angeordneten Sensormitteln auf dem Sensorelement vorzusehen. Bei einer solchen Variante ist es dann auch günstig, den Detektor nicht im Bereich der Anzeige bzw. des Zeigers, sondern auf der durchgehenden Welle im hinteren Bereich des Meßwerkes anzuordnen.

In einer bevorzugten Variante der Erfindung wird vorgeschlagen, daß das Sensormittel die vom Detektor aufgenommene optische Strahlung reflektiert oder transmittiert. Entsprechend der verwendeten Strahlung besitzen die Sensormittel also Reflektions- oder Transmissionseigenschaften und unterscheiden sich so von anderen Bereichen. Im einfachsten Fall wird z.B. eine spiegelnde, reflektierende Ausgestaltung des Sensormittels eingesetzt, bei der anderen Variante wechseln sich z.B. transmittierende, also die Strahlen durchlassende Bereiche von undurchsichtigen Bereichen ab. So ergibt es sich, daß zwischen den inkrementalen angeordneten Sensormitteln die Strahlungen nicht transmittierender oder reflektierender Bereiche angeordnet sind.

In einer weiteren erfindungsgemäßen Variante der Erfindung wird vorgeschlagen, daß die Achse der Welle in Normal- bzw. Mittelstellung des Zeigers zwischen Zeiger und Sensor angeordnet ist. Eine solche Bauform ist z.B. in der Zeichnung gezeigt. Hierdurch wird eine sehr platzsparende Verteilung der Elemente erreicht, wobei trotzdem eine hohe Genauigkeit bei der Angabe der Position des Zeigers verbleibt. Gleichzeitig kollidiert bei dieser erfindungsgemäßen Ausgestaltung der Skalenbereich des Meßwerkes bzw. des das Meßwerk umfassenden Meßgerätes nicht mit dem Sensor. In der Normal- bzw. Mittelstellung des Zeigers wird hierbei verstanden, daß bei einem normalen Einsatz des Meßwerkes die angegebenen geometrischen Verhältnisse herrschen. Da der Zeiger geradlinig ausgebildet ist, sind auch Anordnungen möglich, die der Normal- bzw. Mittelstellung entsprechen, bei welchen die Längsachse des Zeigers, die Achse der Welle sowie der Sensor auf einer Geraden (zumindest für einen Meßwert) liegen. Auch dies ist der Fall dieser erfindungsgemäßen Variante.

Die beispielhafte Funktionsweise des Positionsdetektors ist wie folgt:

Der Sensor umfaßt einen Lichtemitter und einen optischen Detektor. Das Sensorelement ist z.B. ringartig ausgebildet und besitzt eine große Anzahl von inkremental, äquidistant angeordneten Sensormitteln. Diese sind gegenüber dem übrigen Bereich reflektierend, wodurch es sich ergibt, daß Lichtemitter und Detektor des Sensors jeweils auf der gleichen Seite von dem Sensorelement anordenbar sind. Bewegt sich nun der Zeiger aus seiner Grundstellung (Nullstellung), so bewegt sich eine gewisse Anzahl von Inkrementen an den Sensor vorbei, die ein abwechselndes An-/Aus-Signal auf dem Detektor erzeugen. Die Zählelektronik des Positionsdetektors zählt diese Signale bzw. Inkremente mit und ermittelt so die Winkelposition des Zeigers, wodurch die Zeigerposition bekannt ist. Diese wird dann entsprechend ausgegeben.

Die Erfindung umfaßt auch ein Verfahren für das Auswerten der Position des Zeigers eines Meßwerkes, wobei der Zeiger das Signal analog darstellt und die Position des Zeigers von einem Positionsdetektor aufgenommen wird, das sich dadurch auszeichnet, dass dieses Zeigersignal einer Auswerteinheit zugeleitet wird und die Auswerteinheit das durch den Zeiger darzustellende Signal aufbereitet.

Auch dieses Verfahren löst die eingangs gestellte Aufgabe. Der von dem Positionsdetektor aufgenommene Wert wird durch diesen erfindungsgemäßen Vorschlag fassbar, kann in einer Auswerteinheit entsprechend weiterbearbeitet und ausgenutzt werden. Das Verfahren dient dazu, die Anzeigegenauigkeit erheblich zu verbessern und insgesamt die Sicherheit von Anlagen, die mit einem entsprechenden Verfahren ausgestattet sind, zu erhöhen. Im Gegensatz zu den aus dem Stand der Technik bekannten Lösungen erfasst der Positionsdetektor die Position des Zeigers kontinuierlich. In der Auswerteinheit wird dieses Signal ebenfalls kontinuierlich aufbereitet, sodass eine Anzeige zur Verfügung gestellt wird, die dem tatsächlichen Wert des Signals entspricht.

In einer bevorzugten Ausgestaltung der Erfindung wird vorgeschlagen, daß die Auswerteinheit als Signalaufbereitung ausgebildet ist und die Signalaufbereitung das durch den Zeiger darzustellende Signal aufbereitet. Diese Aufbereitung erfolgt in vielfacher Weise. Die Signalaufbereitung erreicht, daß nicht das eingehende Signal, eigentlich das Eingangssignal, zur Anzeige gebracht wird, sondern entsprechend korrigiert' ist. Diese Korrektur ist dabei von unterschiedlichen Kriterien abhängig und kann unterschiedlichen Prinzipien bzw. Maßgaben folgen.

Zunächst ist es möglich, daß die Signalaufbereitung einen Soll-/Ist-Vergleich zwischen dem eingangsseitigem Signal und dem Zeigersignal durchführt und das ausgangsseitige Signal (welches an den Stellantrieb gegeben wird) mit der Maßgabe aufbereitet, daß der angezeigte Wert auch tatsächlich dem Wert des Signals entspricht. Eine solche Strategie hat zum Ziel, einen exakten Wert durch den Zeiger vor dessen Skala anzuzeigen. Reibungsverluste, Linearitätsabweichungen, Bauteiltoleranzen usw. sind durch eine solche erfindungsgemäße Ausführung des Verfahrens eliminierbar und bewirken entsprechende Kosteneinsparungspotentiale bei der Realisierung des erfindungsgemäßen Meßwerkes.

Dieser erfindungsgemäße Vorschlag erreicht aber auch, daß zwei Meßwerke exakt zueinander abgleichbar sind, um z.B. auf einem System einen Sollwert und auf einem zweiten System einen Istwert, z.B. Geschwindigkeit eines Zuges, als Hinweissystem für die Prozeßbedienung mit höchster Präzision zu realisieren. Insbesondere erlaubt die Erfindung die Verwirklichung in bereits bestehenden Mechaniken, ohne neue Freigabetests oder Zulassungen für die Meßwerke, wie sie insbesondere im Bereich der Luftfahrt und Bahntechnik notwendig sind.

Dieser Soll-/Ist-Vergleich erlaubt es des weiteren, nicht mehr korrigierbare Fehlfunktionen (z.B. zu große Abweichungen) des Meßwerkes rechtzeitig zu erkennen und dann entsprechende Alarme auszulösen. Die Erfindung erreicht eine erhebliche Steigerung der Sicherheit und Zuverlässigkeit, da es letztendlich eine Selbstdiagnostik des Meßwerkes beinhaltet. Dieser Vorteil ergibt sich sowohl für das erfindungsgemäße Verfahren, das Meßwerk wie auch für das noch einzugehende Meß- bzw. Auswertsystem.

Des weiteren ist in einer erfindungsgemäßen Variante vorgesehen, daß das Signal durch die Signalaufbereitung derart aufbereitet wird, daß Signalwerte innerhalb zumindest eines Intervalls von Signalwerten in einer anderen Weise von dem Zeiger dargestellt werden, wie Signalwerte außerhalb dieses Intervalls.

Üblicherweise wird ein Signal durch ein Meßwerk z.B. bei einem drehbar gelagerten Zeiger proportional zu seinem Winkelausschlag dargestellt. Interessiert nun z.B. nur ein gewisses Intervall von Meßwerten, z.B. bei einer Geschwindigkeit von 0 bis 300 km/h das Intervall von 50 bis 100 km/h, so würde dies bei einem Gesamtschwenkbereich (bezogen von 0 bis 300 km/h) von z.B. 180° auf der Skala nur einen Bereich von 30° ergeben. Die Übersichtlichkeit gerade in diesem interessierenden Bereich ist gering. Nun ist es möglich, durch diese erfindungsgemäße Variante bei der Darstellung den Meßwertbereich von 50 bis 100 km/h nicht 30° zuzuordnen, sondern z.B. 90°. Die Genauigkeit in diesem Intervall ist erhöht, da dieses entsprechend gespreizt ist.

Über eine entsprechende Signalaufbereitung kann die Anzeigeposition im Verhältnis zum Eingangssignal angepasst werden, um so z.B. auch eine 100% lineare Anzeige zu erzeugen. Auch kann eine lineare Anzeige zu einem nicht linearen Signal kreiert werden.

Des weiteren wird die erfindungsgemäße Aufgabe durch ein Meß- oder Auswertsystem für darzustellende Signale gelöst, welches aus einem Meßwerk, wie beschrieben, besteht und eine Auswerteinheit aufweist, welche die von dem Positionsdetektor aufgenommenen Zeigersignale auswertet. Dieses Meß- bzw. Auswertsystem, welches insbesondere auch das zuvor beschriebene Verfahren einsetzt, schöpft aufgrund seiner Ausgestaltung exakt die gleichen Vorteile, wie sie für das verfahren bzw. das Meßwerk selber beschrieben wurden. Dabei beschränkt sich diese Erfindung nicht darauf, nur allein als Meßsystem eingesetzt zu werden, also entsprechend gemessene Werte exakt anzuzeigen (was ja die eigentliche Aufgabe eines Meßwerkes ist), sondern umfaßt auch eigenständig ein Auswertsystem, um die dargestellten Signale entsprechend auszuwerten, und zwar abhängig von dem tatsächlich angezeigten Wert, aufgrund der Position des Zeigers. Natürlich, und dies ist ein weiterer Vorteil der Erfindung, ist eine Kombination dieses Meßsystemes mit dem Auswertsystem ebenfalls Teil der Erfindung. In ihr werden alle vorgenannten Vorteile der Erfindung gemeinsam erreicht.

Geschickterweise wird vorgesehen, daß die Auswerteinheit als Speicher ausgebildet ist. In diesem Fall erfolgt eine Auswertung dieses Auswertsystemes, z.B. zu einem späteren Zeitpunkt, nämlich dann, wenn der Speicher entsprechend ausgelesen und die Daten bearbeitet werden. Des weiteren umfaßt das Meß- bzw. Auswertsystem aber auch die Ausgestaltung, bei welcher die Auswerteinheit als Signalaufbereitung ausgebildet ist. Die insbesondere bei einem Meßsystem realisierte Variante führt dazu, daß das Eingangssignal durch eine entsprechende Korrektur so modifiziert wird, daß der tatsächlich durch den Zeiger angezeigte Meßwert dem tatsächlichen Wert des Eingangssignals entspricht. Eine solche Variante wird bevorzugt bei einem Meßsystem verwendet.

In diesem Zusammenhang wird insbesondere darauf hingewiesen, daß alle in Bezug auf das Meßwerk beschriebenen Merkmale und Eigenschaften, aber auch Verfahrensweisen sinngemäß auch bezüglich der Formulierung des erfindungsgemäßen Verfahrens und auch bezüglich der Formulierung des erfindungsgemäßen Meß- bzw. Auswertsystemes übertragbar sind und im Sinne der Erfindung einsetzbar und als mit offenbart gelten. Gleiches gilt jeweils auch in umgekehrter Richtung, das bedeutet, daß nur im Bezug auf das im Verfahren bauliche, also vorrichtungsgemäße Merkmale auch im Rahmen der Ansprüche für das Meßwerk bzw. des Meß- und Auswertsystems berücksichtigen und beansprucht werden, die ebenfalls zur Erfindung und Offenbarung zählen. Dem Fachmann ist ein solcher Zusammenhang unmittelbar klar und verständlich.

Die Erfindung wird schematisch anhand von Zeichnungen dargestellt. Es zeigen:

Fig. 1    in einer Ansicht das erfindungsgemäße Meßwerk,

Fig. 2    einen vertikalen Schnitt nach Fig. 1 entsprechend der Linie II/II,

Fig. 3    in einem Blockschaltbild das erfindungsgemäße Verfahren.

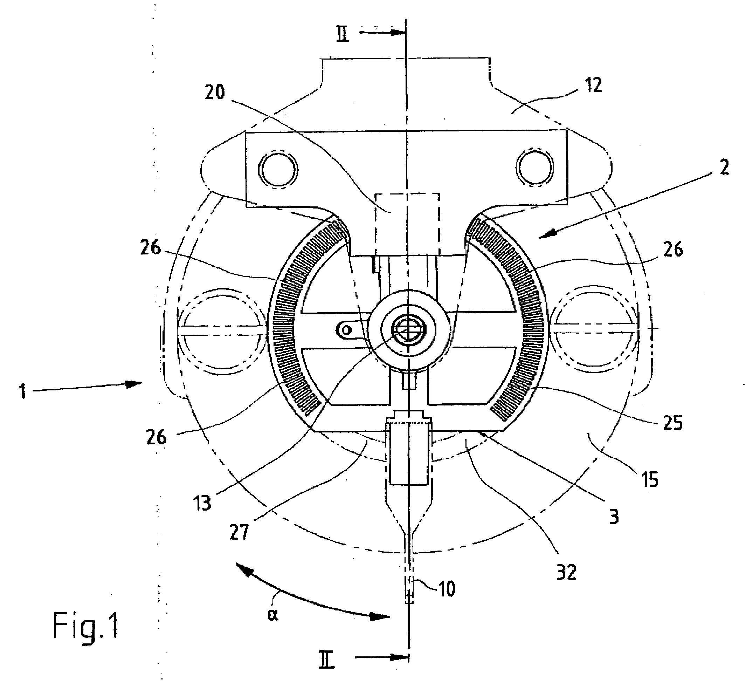

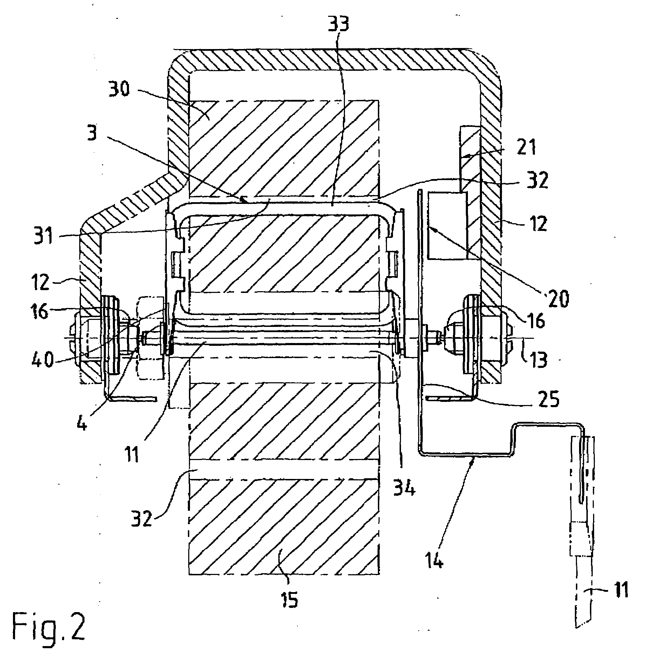

Der Aufbau des erfindungsgemäßen Meßwerkes 1 ist in Fig. 1 und Fig. 2 schematisch dargestellt. Die Erfindung geht z. B. von einem herkömmlich bekannten Meßwerk aus und ergänzt dieses um den Positionsdetektor 2.

Das Meßwerk 1 besteht aus einem Meßwerkgehäuse 12, welches z. B. bügelartig ausgebildet ist und gegebenenfalls noch durch eine Verkleidung ergänzbar ist. Dies hängt von den jeweiligen baulichen Gegebenheiten oder dem Verwendungszweck ab. Das Meßwerk 1 wird gegebenenfalls mit einer Skala und einer Abdeckscheibe usw. zu einem gesamten Meßgerät komplettiert.

Das in Fig. 1, 2 gezeigte Meßwerk 1 ist ein Drehspulmeßgerät, der Zeiger 10 ist um den Winkelbereich $\alpha$ um die Achse 13 drehbar gelagert. Das Prinzip des Meßwerkes beruht auf dem Ausnützen der Abstoßung der elektromagnetischen und permanentmagnetischen Kräfte. Das Meßwerk 1 umfaßt daher einen Grundkörper 15, welcher die Permanentmagneten aufnimmt. In dem Grundkörper 15 ist ein Ringspalt 32 konzentrisch um die Achse 13 vorgesehen. In diesem Ringspalt 32 bewegt sich die Drehspule 31, die stromdurchflossen ist. Der Stromfluß ist z.B. abhängig von dem oftmals als Spannung anliegenden Meßsignal und ergibt sich aufgrund des ohmschen Gesetzes. Die Abstoßung erfolgt dabei gegenüber dem Permanentmagneten 30 und wirkt gegen eine Feder 40 als Rücktreibelement 4.

Das Zusammenwirken der elektromagnetischen und permanentmagnetischen Abstoßungskräfte führt zu einem Signalkraftelement, das Zusammenwirken des Signalkraftelementes und des Rücktreibelementes 4 ergibt den Stellantrieb 3.

Der Grundkörper 15 mit dem Permanemtmagneten 30 befindet sich dabei im Inneren des Meßwerkes 1 und wird, zumindest teilweise, von dem Gehäuse 12 umgeben. Das Gehäuse 12 ist dabei so angeordnet, daß es links und rechts von dem Grundkörper 15, zumindest bis über die Mitte des Grundkörpers 15, heruntergezogen ist und neben dem Ringspalt 32 auch noch eine Zentralbohrung 34 aufweist, durch welche die Welle 11 geführt ist. Die Welle 11 trägt zum einen den Zeiger 10 und ist zum anderen drehbar in entsprechend leichtgängigen Drehlagern 16 gelagert, die ihrerseits an dem Gehäuse 12 angeordnet sind.

Im Schnitt nach Fig. 2 umgibt das Gehäuse 12 den oberen Teil des Grundkörpers 15 U-artig.

Oberhalb des rechten, äußeren Drehlagers 16 befindet sich auf der Innenseite des Gehäuses 12 der Sensor 20, welcher Teil des Positiondetektors 2 für die Ermittlung der Position, also der Stellung des Zeigers 10, ist.

Hierzu ist der Sensor 20 z. B. auf einer Sensorplatine 21 angeordnet, welche entsprechende Anschlußkontakte, z. B. für die Stromversorgung und Informationsleitung, aufweist. Somit wird das sowieso bereits vorhandene Gehäuse 12 nochmals genützt, nämlich zur Aufnahme und Halterung des feststehenden Teils des Positionsdetektors 2, nämlich des Sensors 20.

Wie beschrieben, besteht der Positionsdetektor 2 aus dem Sensor 20 und dem Sensorelement 25. Das Sensorelement 25 führt bei dieser Variante der Erfindung exakt die gleiche Verschwenkbewegung aus wie der Zeiger 10. Daher ist das Sensorelement 25 auch auf der Welle 11 gegenüber dieser verdrehfest angeordnet. Die von der bügelartigen Drehspule 31 herrührende Rotationsbewegung des Stellantriebes 3 wird so in identischer Weise auf das Sensorelement 25 übertragen.

Bezüglich der in Fig. 2 gezeigten Variante befinden sich Zeiger 10 und Sensor 20 auf der gleichen Seite des Grundkörpers 15, also auf der gleichen Hälfte der Welle 11. Natürlich ist es möglich, den Grundkörper 15 zwischen dem Sensor 20 bzw. dem Positionsdetektor 2 und dem Zeiger 10 anzuordnen, also den Sensor 20 auf die "Rückseite" des Meßwerkes zu versetzen. Beide Lösungen gehören zur Erfindung.

Das Sensorelement 25 ist scheiben- bzw. ringartig ausgebildet. In Fig. 1 ist gezeigt, daß das ringartige Sensorelement 25 nicht vollständig ausgebildet ist, sondern im unteren Bereich eine sekantenartige Abflachung 27 aufweist. Diese Abflachung 27 ist in jenem Bereich, wo sich dann rechtwinklig gegenüber der Ebene des Sensorelementes 25 der Zeigerträger 14 anschließt, welcher dann den Zeiger 10 trägt.

Im Umfangsbereich des Sensorelementes 25 (vgl. Fig. 1) sind eine Vielzahl von inkremental ausgebildeten, äquidistant angeordneten Sensormitteln 26 vorgesehen. Der Sensor 20 beinhaltet in diesem Ausführungsbeispiel sowohl einen Lichtemitter wie auch einen Detektor (jeweils nicht gezeigt). Das Sensormittel 26 ist reflektierend, wobei die zwischen den jeweiligen Sensormitteln 26 angeordneten Zwischenbereiche nicht reflektierend sind. So ergibt sich bei der Drehbewegung $\alpha$ des Zeigers 10 eine Abfolge von Hell-Dunkel-Eindrücken am Detektor, die entsprechend aufgezählt werden und somit die Position des Zeigers 10 ergeben.

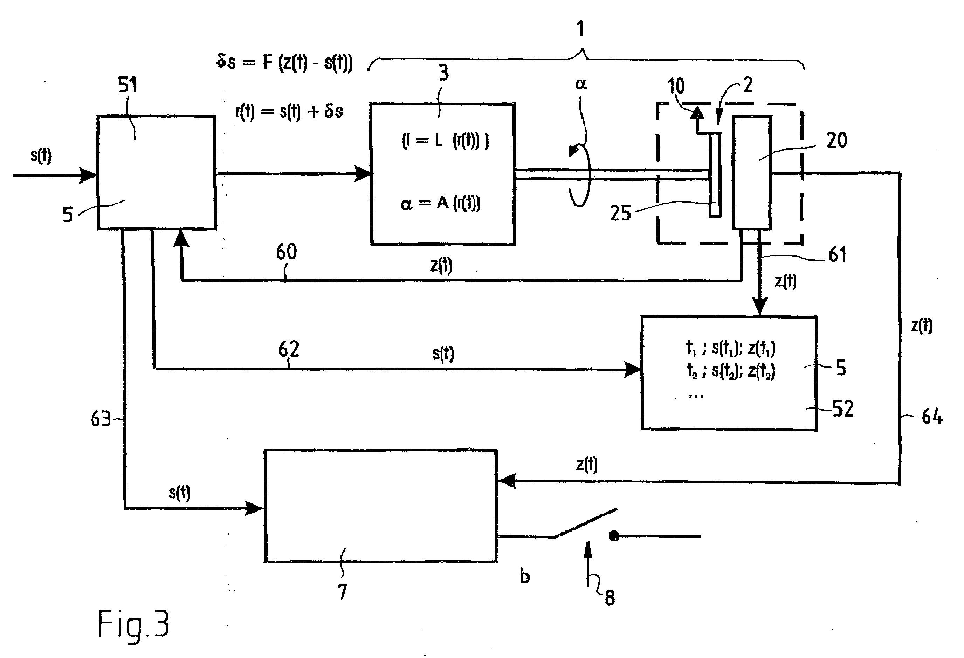

In Fig. 3 ist in einem Bockschaltbild der Verfahrensablauf des erfindungsgemäßen Verfahrens gezeigt. Das Meßwerk 1 ist in diesem Bockschaltbild ebenalls schematisch dargestellt. Der Stellantrieb 3 setzt das Signal s (t) bzw. r (t) um in eine Drehbewegung $\alpha$. Dies ist ausgedrückt durch die Formel

$$\alpha \;=\; A \; (r(t)).$$

Da das Signal s bzw. r eine Veränderliche der Zeit ist, ist sie in der funktionalen Schreibweise s (t) bzw. r(t) als Funktion der Zeit t angegeben.

Da gemäß der Erfindung auch vorgesehen ist, daß anstelle einer Drehbewegung des Zeigers 10 eine Längsbewegung möglich ist, führt der Stellantrieb 3 in einer erfindungsgemäßen Alternative auch eine Längsbewegung, die ausgedrückt wird durch 1 = L (r(t)), aus.

Für die weitere Betrachtung beziehen wir uns nur auf die Drehbewegung $\alpha$. Die Funktionalität ist aber in gleicher Weise auf eine Linear- oder Längsbewegung 1 anwendbar.

Das Meßwerk 1 setzt das Signal s (t) um in eine entsprechende Winkelposition $\alpha$, die hieraus resultierende Zeigerposition z (t) wird von dem Positionsdetektor 2 (im Zusammenwirken des Sensorelementes 25 mit dem Sensor 20) ermittelt und in verschiedener Weise ausgegeben.

Bei der ersten Variante wird das Zeigersignal z (t) über die Leitung 60 in eine Auswerteinheit 5 geleitet, die in einer ersten Variante als Signalaufbereitung 51 ausgebildet ist. Bei dieser Ausgestaltung wird angestrebt, daß der tatsächlich dargestellte Wert des Zeigers 10 exakt dem Wert des Eingangssignals s (t) ist. Es ist also angestrebt, daß

$$s \; (t) \;=\; z \; (t)$$

ist. Da dies aufgrund von verschiedenen Verlusten (Reibung, Linearitätsprobleme usw.) nicht sichergestellt ist, wird mit der Signalaufbereitung das eingangsseitige Signal s (t) durch ein Korrektursignal $\delta$ s korrigiert und ein so korrigiertes Signal r (t) dem Stellenantrieb 3 zugeleitet.

Das Korrektursignal $\delta$ s ist daher eine Funktion des Soll-/Ist-Vergleiches z (t) - s (t), also z.B. $\delta$ s = F (z (t)-s(t)).

Die Funktion hat insbesondere zum Ziel zu erreichen, daß der Sollwert dem Istwert entspricht. Das Korrektursignal $\delta$ s kann dabei zu einer Erhöhung oder Erniedrigung des eingangsseitigen Signales führen, also - funktional dargestellt - positiv oder negativ sein.

Neben dieser ersten erfindungsgemäßen Variante des Verfahrens ist es aber auch möglich, daß das Zeigersignal z (t) einer als Speicher 52 ausgestalteter Auswerteinheit zugeleitet wird. Hierzu ist die Leitung 61 vorgesehen. Dieser Speicher 52 ist zum Beispiel Teil einer Black-Box und zeigt die tatsächlich angezeigten (auch vom Bediener / Fahrer / Anwender gesehenen Zeigerwerte) mit. Es werden also in diesem Speicher 52 zumindest Wertepaare

$$t_i \;;\; z \; (t_i)$$

mit i von 1 bis unendlich abgelegt. Natürlich ist der Speicher nicht unbegrenzt aufnahmefähig. Die Zahl an aufzunehmenden Werten ist aber sehr groß.

Bei dieser Variante der Erfindung wird auf den Einsatz einer Signalaufbereitung 51 verzichtet. Das Signal s (t) wird unkorrigiert auf den Stellenantrieb 3 gegeben.

In einer Variante der Erfindung ist vorgesehen, daß von der Signalaufbereitung 51 über die Leitung 62 das Signal s (t) ebenfalls auf den Speicher 52 gegeben wird und dann in dem Speicher sowohl das Zeigersignal z wie auch das Signal s als Funktion der Zeit t abgelegt werden.

Des weiteren ist eine Steuereinheit 7 erfindungsgemäß vorgesehen, in der das Zeigersignal z (t) und/oder das darzustellende Signal s (t) zugeleitet wird. So sind die Leitungen 63 für das Signal s (t) bzw. Leitung 64 für das Zeigersignal z (t) vorgesehen. Die Steuereinheit 7 löst dann gegebenenfalls in Abhängigkeit nur des Zeigersignales z, nur das darzustellende Signal s oder nur in Abhängigkeit eines Betätigungssignales b einer Betätigungseinheit 8 weitere Funktionen aus. Neben diesen jeweils isolierten Bedingungen können diese natürlich wahlfrei miteinander kombiniert werden, also in Abhängigkeit aller drei oder in Abhängigkeit nur zweier der vorliegenden Signale b, s, z.

Die Steuereinheit 7 dient z.B. dazu, Alarme auszulösen, wenn die Differenz zwischen dem Signal s und dem Zeigersignal z Schwellwerte überschreitet. Man kann z.B. einen Defekt des Meßwerkes frühzeitig erkennen, bevor die Bedienperson, die das Meßwerk abliest, irritiert ist und eventuelle falsche Entscheidungen aufgrund des falsch angezeigten Wertes des Zeigers 10 vornimmt.

Es ist aber auch möglich, insbesondere mit Hilfe der Bedieneinheit 8 eine Kontrollfunktion für das Bedienpersonal einzuführen, wobei das Bedienpersonal durch Aufforderung einer Eingabebestätigung b die Kontrollfunktion installiert. Es sind dann auch das Signal s, das Zeigersignal z, also auch das Eingabebestätigungssignal b zu vergleichen und auszuwerten.

Natürlich ist auch die Steuereinheit 7 mit einem entsprechenden Speicher ausstattbar, um entsprechende Bedienungen zu protokollieren.

Es ist klar, daß alle vorgenannten Merkmale, die im Zusammenhang mit dem Verfahren beschrieben worden sind, bei Bedarf auch Gegenstand der Ansprüche des Meß- bzw. Auswertsystemes sind, da sich das Meß- bzw. Auswertsystem gegenständlich auf diese Funktionalitäten, wie in Fig. 3 beschrieben und im Verfahren verdeutlicht, bezieht.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

**Patentansprüche**

1. Meßvorrichtung, insbesondere Meßwerk zur Darstellung eines elektrischen Signals, z.B. eines Meßsignals, bestehend aus einem insbesondere ablesbaren Zeiger, der durch einen Stellantrieb in Abhängigkeit des Signales positionierbar ist, **gekennzeichnet durch** einen Positionsdetektor (2) für die Position des Zeigers (10), wobei der Positionsdetektor (2) die Position des Zeigers (10) kontinuierlich an eine Auswerteeinheit (5) überträgt, die das **durch** den Zeiger (10) darzustellende Signal aufbereitet.

2. Meßvorrichtung nach Anspruch 1, **dadurch gekennzeichnet, daß** die Auswerteeinheit (5) als Signalaufbereitung (51) ausgebildet ist und die Signalaufbereitung einen Soll-/Ist-Vergleich zwischen dem eingangsseitigen Signal (s (t)) und dem Zeigersignal (z (t)) durchzuführen vermag und ein ausgangsseitiges Signal (r (t)) mit der Maßgabe aufbereitet, daß der angezeigte Wert auch dem tatsächlichen Wert des Signals entspricht.

3. Meßvorrichtung nach einem oder beiden der vorhergehenden Ansprüche, **dadurch gekennzeichnet, daß** die Signalaufbereitung (51) derart ausgebildet ist, daß sie das korrigierte beziehungsweise ausgangsseitige Signal (r (t)) dem Stellantrieb (3) zuleitet.

4. Meßvorrichtung nach einem oder mehreren der vorhergehenden Ansprüche, **dadurch gekennzeich-**

**net, daß** der Positionsdetektor (2) aus einem Sensor (20) und einem mit dem Sensor (20) zusammenwirkenden Sensorelement (25) besteht und/oder **gekennzeichnet durch** einen optisch, kapazitiv, magnetisch oder mit elektromagnetischen Wellen wirkenden Positionsdetektor (2) und/oder der Positionsdetektor (2) in Transmissions- oder Reflektionsweise arbeitet.

5.   Meßvorrichtung nach einem oder mehreren der vorhergehenden Ansprüche, **dadurch gekennzeichnet, daß** der Sensor (20) am Meßwerk (1) feststehend und das Sensorelement (25) sich mit dem Zeiger (10) mitbewegend ausgebildet ist und/oder der Sensor (20) zumindest einen lichtempfindlichen Detektor umfaßt und/oder der Sensor (20) einen Lichtemitter umfaßt und/oder der Sensor (20) im infraroten, optisch sichtbaren oder ultravioletten Spektralbereich arbeitet.

6.   Meßvorrichtung nach einem oder mehreren der vorhergehenden Ansprüche, **dadurch gekennzeichnet, daß** das Sensorelement (25) auf der Welle (11) drehbar gelagert ist und so die gleiche Drehbewegung ausführt wie der Zeiger (10) und/oder das Sensorelement (25) auf einer Welle (11) drehbar gelagert ist und an dem Sensorelement (25) ein Zeigerträger (14) anschließt, welcher den Zeiger (10) trägt und/oder das Sensorelement (25) ring- oder scheibenartig ausgebildet ist und/oder am Umfang oder im Randbereich des Sensorelementes (25) eine Mehrzahl von Sensormitteln (26) angeordnet sind und/oder die Sensormittel (26) inkremental an dem Sensorelement (25) angeordnet sind.

7.   Meßvorrichtung nach einem oder mehreren der vorhergehenden Ansprüche, **dadurch gekennzeichnet, daß** das Sensormittel (26) die vom Detektor aufgenommene, optische Strahlung reflektiert oder transmittiert und/oder zwischen den inkremental angeordneten Sensormitteln (26) die Strahlung nicht transmittierende oder reflektierende Bereiche angeordnet sind.

8.   Meßvorrichtung nach einem oder mehreren der vorhergehenden Ansprüche, **dadurch gekennzeichnet, daß** die Welle (11) im Meßwerkgehäuse (12) gelagert ist und/oder das Meßwerkgehäuse (12) den Sensor (20) trägt und/oder der Sensor (20) auf einer Sensorplatine (21) mit Anschlußkontakten angeordnet ist und/oder die Achse (13) der Welle in Normal- oder Mittelstellung des Zeigers (10) zwischen Zeiger (10) und Sensor (20) angeordnet ist und/oder das Meßwerk (1) analog ausgebildet ist.

9.   Meßvorrichtung nach einem oder mehreren der vorhergehenden Ansprüche, **dadurch gekennzeichnet, daß** der Stellantrieb (3) durch ein den Zeiger (10) aufgrund des Signales bewegendes Signalkraftelement und ein Rücktreibelement (4) gebildet ist und/oder das Signalkraftelement aufgrund elektromagnetischer und permamentmagnetischer Abstoßungskräfte eine Bewegung des Zeigers (10) bewirkt und/oder **gekennzeichnet durch** eine lineare Bewegung oder Schwenkbewegung ($\alpha$) des Zeigers (10) und/oder der Zeiger (10) auf einer Welle (11) dreh- bzw. verschwenkbar gelagert ist und/oder **gekennzeichnet durch** ein/e/n sich mit dem Zeiger (10) mitbewegenden/s Spule, Eisen oder Magneten und/oder das Rücktreibelement (4) als Federelement (40) ausgebildet ist.

10.  Verfahren für das Auswerten der Position des Zeigers einer Meßvorrichtung, insbesondere eines Meßwerkes, wobei der Zeiger das Signal analog darstellt und die Position des Zeigers von einem Positionsdetektor aufgenommen wird, **dadurch gekennzeichnet, daß** dieses Zeigersignal einer Auswerteinheit insbesondere kontinuierlich zugeleitet wird und die Auswerteinheit das durch den Zeiger darzustellende Signal aufbereitet.

11.  Verfahren nach dem vorhergehenden Anspruch 10, **dadurch gekennzeichnet, daß** die Auswerteeinheit als Signalaufbereitung ausgebildet ist und die Signalaufbereitung einen Soll-/Ist-Vergleich zwischen dem eingangsseitigen Signal und dem Zeigersignal durchführt und das ausgangsseitige Signal mit der Maßgabe aufbereitet, daß der angezeigte Wert auch tatsächlich dem Wert des Signales entspricht und/oder die Auswerteinheit als Speicher, insbesondere zur Speicherung der Zeigersignale als Funktion der Zeit dient und/oder der Speicher auch das Signal als Funktion der Zeit speichert.

12.  Verfahren nach einem oder beiden der vorhergehenden Ansprüche 10 und 11, **dadurch gekennzeichnet, daß** das Signal durch die Signalaufbereitung derart aufbereitet wird, daß Signalwerte innerhalb zumindest eines Intervalls von Signalwerten in einer anderen Weise von dem Zeiger dargestellt werden, wie Signalwerte außerhalb dieses Intervalls und/oder eine Steuereinheit vorgesehen ist, der das Zeigersignal und/oder das darzustellende Signal zugeleitet wird und die Steuereinheit in Abhängigkeit des Zeigersignals und/oder des darzustellenden Signals und/oder eines Betätigungssignales einer Betätigungseinheit weitere Funktionen auslöst.

13.  Meß- und/oder Auswertsystem für darzustellende Signale, mit einer Meßvorrichtung nach einem oder mehreren der vorhergehenden Ansprüche 1 bis 10 und einer Auswerteinheit, welche die von dem Positionsdetektor aufgenommenen Zeigersignale auswertet.

19 **EP 1 720 021 A1** 20

**14.** Meß- und/oder Auswertsystem nach Anspruch 13, **dadurch gekennzeichnet, daß** die Auswerteinheit (5) als Speicher (52) ausgebildet ist und/oder die Auswerteinheit (5) als Signalaufbereitung (51) ausgebildet ist.

**11**

Fig.1

Fig.2

EP 1 720 021 A1

$$\delta s = F \left( z(t) - s(t) \right)$$

$$r(t) = s(t) + \delta s$$

$$\left( l = L \left( r(t) \right) \right)$$

$$\alpha = A \left( r(t) \right)$$

$t_1 \; ; \; s(t_1); \; z(t_1)$

$t_2 \; ; \; s(t_2); \; z(t_2)$

...

s(t)

z(t)

z(t)

s(t)

z(t)

s(t)

z(t)

b

Fig.3

**Europäisches Patentamt**

**EUROPÄISCHER RECHERCHENBERICHT**

Nummer der Anmeldung

EP 06 00 9219

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/261688 A1 (MACGREGOR RODERICK ET AL) 30. Dezember 2004 (2004-12-30) | 1-5,7, 10,11,13 | INV. G01R5/00 |
| A | * Absätze [0008], [0049] - [0057]; Abbildung 8 * | 6,8,9, 12,14 | G01D13/00 |
| | ----- | | |
| X | US 4 879 510 A (ITOH ET AL) 7. November 1989 (1989-11-07) | 1-5,7, 10,11,13 | |
| A | * Spalte 2, Zeilen 16-26; Abbildungen 1-4 * | 6,8,9, 12,14 | |
| | * Spalte 3, Zeilen 9-45 * | | |
| | * Spalte 4, Zeile 60 - Spalte 5, Zeile 29 * | | |
| | * Spalte 6, Zeile 28 - Spalte 7, Zeile 21 * | | |
| | * Spalte 8, Zeilen 20-42 * | | |
| | ----- | | |
| X | US 6 741 184 B1 (MILLER MARK J ET AL) 25. Mai 2004 (2004-05-25) | 1-4,10, 11,13 | |
| A | * Spalte 1, Zeilen 38-56; Abbildungen 1-5 * | 5-9,12, 14 | |
| | * Spalte 2, Zeilen 11-63 * | | RECHERCHIERTE SACHGEBIETE (IPC) |
| | ----- | | |
| A | DE 198 37 824 A1 (ROBERT BOSCH GMBH) 2. März 2000 (2000-03-02) | 1-14 | G01R |
| | * Anspruch 1; Abbildung 1 * | | G01B |
| | ----- | | |

Der vorliegende Recherchenbericht wurde für alle Patentansprüche erstellt

| Recherchenort | Abschlußdatum der Recherche | Prüfer |
|---|---|---|
| München | 23. August 2006 | O'Callaghan, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 9219

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2006

| Im Recherchenbericht angeführtes Patentdokument | Datum der Veröffentlichung | Mitglied(er) der Patentfamilie | Datum der Veröffentlichung |
|---|---|---|---|
| US 2004261688 A1 | 30-12-2004 | KEINE | |
| US 4879510 A | 07-11-1989 | KEINE | |
| US 6741184 B1 | 25-05-2004 | KEINE | |
| DE 19837824 A1 | 02-03-2000 | KEINE | |

Für nähere Einzelheiten zu diesem Anhang : siehe Amtsblatt des Europäischen Patentamts, Nr.12/82

EPO FORM P0461